# FASCICULE DE BREVET EUROPEEN

(11) **EP 0 836 310 B1**
(45) Date de publication et mention de la délivrance du brevet: **12.04.2006**
(21) Numéro de dépôt: 97203034.0
(22) Date de dépôt: 02.10.1997
(51) Int. Cl.: H04M 1/60

(54) **Appareil telephonique muni de moyens de contrôle automatique de gain**
Telefongerät mit automatischer Verstärkungsregelung
Telephone set with automatic gain control means

(30) Priorité: 10.10.1996 FR 9612379
(43) Date de publication de la demande: 15.04.1998
(73) Titulaire: Koninklijke Philips Electronics N.V., 5621 BA Eindhoven (NL)
(72) Inventeur: Deville, Yannick, 75008 Paris (FR); Fleurenceau, Loic, 75008 Paris (FR); Rech, Olivier, 75008 Paris (FR); Audio, Gilles, 75008 Paris (FR)
(74) Mandataire: Chaffraix, Jean

(56) Documents cités:
- EP-A- 0 661 858
- EP-A- 0 682 437
- EP-A- 0 717 547
- NN-A-
- US-A- 4 829 565
- US-A- 4 975 949
- US-A- 5 204 971

## Description

Appareil téléphonique muni de moyens de contrôle automatique de gain (13) pour contrôler, en fonction d'un niveau de bruit ambiant local, un volume sonore restitué à partir d'un signal provenant d'un correspondant, de moyens (16) pour stocker différentes lois de variation du gain en dépendance avec le niveau de bruit ambiant et ceci pour un même niveau de bruit ambiant exempt du volume sonore restitué.

L'invention est particulièrement utile dans le cas des téléphones mobiles ou des téléphones sans fil qui peuvent être utilisés dans une ambiance de bruit élevé pour laquelle il s'avère utile d'adapter le niveau du son restitué par l'appareil en dépendance avec le niveau de bruit ambiant.

On connaît le document EP 682 437 qui concerne un dispositif de contrôle automatique de volume sonore pour un appareil téléphonique. Le volume sonore est contrôlé automatiquement en fonction du bruit ambiant de manière à délivrer le niveau sonore le mieux adapté aux conditions d'écoute. L'appareil détecte la présence de paroles prononcées par l'utilisateur de manière à effectuer la mesure du bruit en dehors de ces périodes de paroles. Les corrections sont effectuées à l'aide de moyens d'amplification qui appliquent une loi de variation du gain couvrant l'étendue du niveau de bruit. Le dispositif ainsi décrit décharge l'utilisateur de toute manoeuvre au cours de ses communications téléphoniques. Or ceci peut être insuffisant dans certaines conditions d'utilisation. En particulier, un téléphone mobile peut être utilisé dans des conditions de bruit variables et diverses auxquelles peuvent s'ajouter des liaisons avec le correspondant de plus ou moins bonne qualité ainsi qu'une dépendance du niveau avec lequel la voix du correspondant est reçue provoquant à la réception un signal de plus ou moins forte amplitude de sorte que le signal sonore restitué peut devenir difficilement audible par un utilisateur. En effet, l'intensité de la voix du correspondant peut varier selon sa position par rapport à son microphone ou selon la force de sa voix. D'autre part les facultés auditives de l'utilisateur du téléphone varient d'un utilisateur à un autre. Toutes ces raisons font qu'il est souhaitable de permettre à l'utilisateur d'intervenir sur le niveau du volume sonore restitué en fonction de ses préférences.

Le document EP-A 0661 858 décrit aussi un appareil de ce genre.

Le but de l'invention est donc de permettre à un auditeur de choisir un mode de variation automatique du volume sonore correspondant à son propre confort. Les appareils téléphoniques étant des appareils à usage grand public il faut en conséquence disposer de solutions peu onéreuses pour ne pas grever le coût de tels appareils.

L'invention propose un appareil du genre mentionné ci-dessus qui apporte un grand confort à l'utilisateur sans qu'il soit besoin d'effectuer trop de commandes.

Pour cela, un tel appareil est remarquable en ce qu'il comporte des moyens d'entrée (17) pour permettre à un utilisateur de choisir, à partir d'un premier gain une des lois en fonction de son confort d'écoute en tenant compte du fait que la loi détermine un gain différent du premier gain.

Il est connu aussi du document US-A 5 204 971 d'utiliser différentes lois de variation du gain en dépendance avec le niveau de bruit ambiant et ceci pour un même niveau de bruit ambiant exempt du volume sonore restitué.

L'appareil peut être adapté aux préférences de chaque utilisateur ou opérer en mode totalement automatique, dans toutes les conditions de bruit et pour différentes qualités de transmission.

Préférentiellement ces fonctions supplémentaires sont obtenues par logiciel ce qui modifie très peu la structure matérielle courante des appareils. Les différentes lois de variation du gain peuvent être stockées dans des moyens de mémorisation par exemple une mémoire qui peut être adressée par des touches opérant une incrémentation/décrémentation des adresses dans le cas d'une commande par l'utilisateur. Le coût supplémentaire d'un appareil muni de ces fonctions est peu élevé.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:
Figure 1 : un schéma d'un appareil téléphonique selon l'invention muni de moyens d'entrée actionnés par un utilisateur.
Figure 2 : une table de plusieurs lois de variations du gain en fonction du niveau du bruit ambiant.
Figure 3 : des courbes montrant les variations du niveau LEV du signal du microphone, les variations du signal SPCH de présence de la voix de l'utilisateur, les variations du signal de contrôle CRTL qui est appliqué dans ce cas.
Figure 4 : un organigramme montrant les différentes étapes pour sélectionner la loi de variation désirée.
Figure 5 : un schéma d'un appareil téléphonique selon l'invention muni de moyens à filtrage adaptatif pour un fonctionnement mains libres du téléphone.
Figure 6 : un schéma d'un appareil téléphonique selon l'invention muni de moyens opérant un calcul de l'énergie du signal pour un fonctionnement mains libres du téléphone.

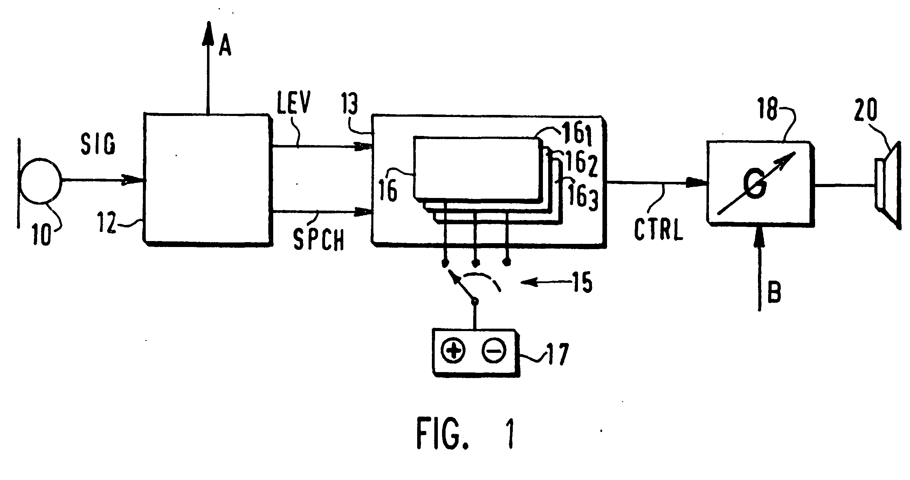

La figure 1 représente un schéma d'un appareil téléphonique selon l'invention. Il comporte des moyens de détection sonore représentés ici par un microphone 10 et des moyens de diffusion sonore représentés ici par un écouteur 20. Ces moyens peuvent être réunis dans un combiné ou séparés pour un fonctionnement mains libres. Bien qu'ils ne soient pas représentés sur la figure 1, les moyens de détection 10 comportent des composants habituels tels qu'un convertisseur analogique/numérique (pour un téléphone numérique), des filtres pour limiter les bandes passantes, un amplificateur. Le microphone délivre un signal SIG qui entre dans des moyens de traitement 12 qui sont suivis de moyens 13 de contrôle automatique de gain. Le signal SIG renferme la voix de l'utilisateur du téléphone ainsi que le bruit ambiant. Les moyens de traitement 12 extraient du signal SIG d'une part la voix A du locuteur (l'utilisateur) formant le contenu du signal SIG et d'autre part des caractéristiques du signal SIG. Il s'agit par exemple:
- d'un signal LEV mesurant le niveau sonore du signal détecté SIG;
- d'un signal SPCH caractérisant les périodes d'apparition de la voix dans le signal SIG.

La voix A de l'utilisateur peut être codée de diverses manières par les moyens de traitement 12 pour être transmise vers un correspondant.

Les deux signaux LEV et SPCH entrent dans les moyens de contrôle 13 qui délivrent un signal de contrôle CTRL à des moyens d'amplification 18. Ce signal de contrôle agit, en fonction du bruit ambiant mesuré, sur le niveau sonore délivré par l'écouteur c'est-à-dire qu'il applique un gain variable G au signal B provenant du correspondant. Selon l'invention, l'appareil dispose de moyens d'entrée 17 permettant à l'utilisateur d'imposer ses préférences de niveau d'écoute. Préférentiellement, ces moyens d'entrée sont constitués d'un bouton d'incrémentation "plus" et d'un bouton de décrémentation "moins". L'action de l'utilisateur est décodée par des moyens de sélection 15 ou par un programme pour adresser une des lois stockées dans les moyens de mémorisation 16, par exemple trois lois 16₁, 16₂, 16₃.

L'algorithme de fonctionnement est le suivant. Lorsque le signal SPCH est inactif (état 0) c'est-à-dire qu'il n'y a pas de voix dans le signal SIG, les moyens 13 sont activés. Ils reçoivent le signal LEV donnant le niveau de bruit ambiant. D'après les caractéristiques de la loi de variation sélectionnée parmi celles stockées dans les moyens 13 et selon le niveau du bruit donc du signal LEV, les moyens 13 délivrent le signal CTRL qui définit le gain G à appliquer à l'instant considéré.

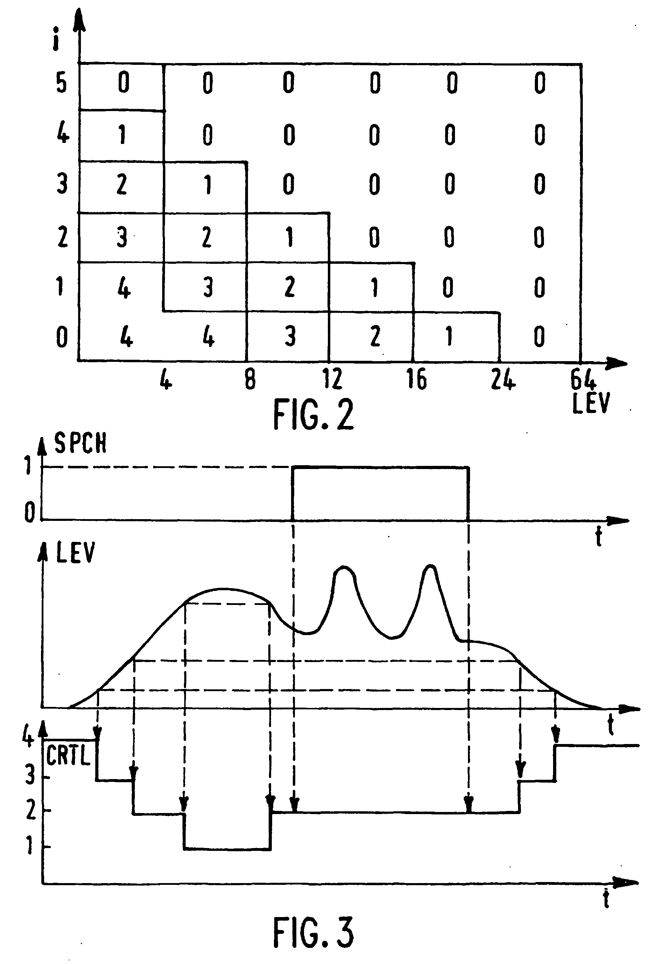

La figure 2 indique six lois donnant l'amplitude du signal CTRL en fonction du bruit ambiant LEV (axe horizontal). Chaque loi repérée par un index i correspond à une ligne de la figure. Le signal LEV est numérisé sur 64 pas dans cet exemple. Le signal de contrôle CTRL comporte cinq niveaux 0, 1, 2, 3, 4 portés sur la figure 2. La valeur 4 correspond au gain le plus faible de l'amplificateur et la valeur 0 correspond au gain le plus élevé. Ainsi lorsque le bruit est faible (par exemple LEV=4) le gain appliqué est faible (CTRL=4) pour la loi i=0.

Lorsque le signal de détection de voix est actif (SPCH=1), les moyens 13 sont rendus inactifs c'est-à-dire que le niveau de bruit n'est pas pris en compte et que le niveau du signal CTRL est conservé à sa dernière valeur. Ceci est dû au fait que dans ce cas le niveau de bruit ambiant ne peut pas être obtenu à partir du signal LEV.

Lors de l'établissement d'une communication téléphonique, qu'il s'agisse de l'utilisateur habituel ou d'un nouvel utilisateur, l'appareil démarre avec une loi "par défaut", la loi d'index 0 ou d'index faible. Ensuite, lorsque l'utilisateur appuie sur la touche "plus" (figure 1), les moyens de sélection 15 sélectionnent l'index de loi suivant (jusqu'à iₘₐₓ). L'index i est remplacé par l'index i+1 de manière à augmenter le gain. De la même manière, lorsque l'utilisateur appuie sur la touche "moins", les moyens de sélection 15 sélectionnent l'index de loi précédent (jusqu'à iₘᵢₙ). L'index i est remplacé par l'index i-1 de manière à diminuer le gain. Ainsi l'appareil comporte des moyens pour faire que la loi d'adaptation puisse être choisie par l'utilisateur en fonction de ses préférences, les réglages étant effectués automatiquement en fonction du niveau de bruit ambiant.

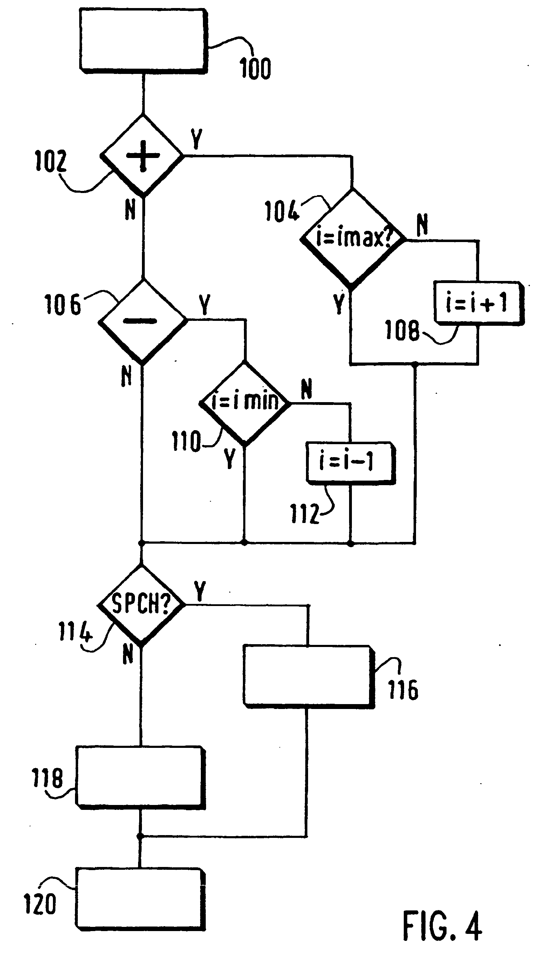

La figure 4 indique l'organigramme des différentes étapes mises en oeuvre dans l'invention.
- étape 100 -Démarrage automatique et cyclique du programme d'ajustement du volume;
- étape 102 -Test pour déterminer si une demande d'augmentation du gain a été faite depuis le dernier appel au programme. Si la réponse est négative passage à l'étape 106. Si la réponse est positive passage à l'étape 104.
- étape 104 -Test pour déterminer si le signal CTRL est à sa valeur maximale. Si la réponse est positive passage à l'étape 114. Si la réponse est négative passage à l'étape 108;
- étape 108 -Incrémentation de l'index de loi: i=i+1:
- étape 106 -Test pour déterminer si une demande de diminution du gain a été faite depuis le dernier appel au programme. Si la réponse est négative passage à l'étape 114. Si la réponse est positive passage à l'étape 110.
- étape 110 -Test pour déterminer si le signal CTRL est à sa valeur minimale. Si la réponse est positive passage à l'étape 114. Si la réponse est négative passage à l'étape 112;
- étape 112 -Décrémentation de l'index de loi: i=i-1;
- étape 114 -Détermination si le signal de voix est actif SPCH=1. Si la réponse est positive, passage à l'étape 116;
- étape 116 -Les moyens 13 conservent les réglages préalablement existants, le signal CTRL reste inchangé;
- étape 118 -Si le signal de voix a été détecté inactif à l'étape 114 (SPCH=0), les moyens 13 sont activés pour effectuer le calcul du signal de contrôle CTRL de manière à modifier le gain en conséquence.
- étape 120 -Les moyens d'amplification 18 sont actionnés par le signal CTRL.

La figure 3 montre le déroulement en fonction du temps des différentes actions apparaissant au cours de plusieurs appels successifs au programme. On observe que lorsque SPCH=O le signal CTRL varie comme cela a été indiqué précédemment. Lorsque SPCH passe à l'état 1, le signal CTRL conserve la valeur qu'il avait juste avant l'apparition de cette transition.

Les stratégies pour passer d'une loi de variation à une autre loi peuvent être diverses. Ainsi l'index i peut être augmenté ou diminué non pas d'un pas mais de plusieurs pas jusqu'à ce que le signal de contrôle ait réellement varié. Ceci se présente pour les niveaux faibles de bruit pour lesquels les variations du gain sont faibles. Ainsi considérons la situation représentée par les lois i=0 et i=1 de la figure 2. Pour ces lois, lorsque par exemple LEV est inférieur à 4, le signal CTRL conserve la valeur 4. Ainsi pour ces conditions de bruit (LEV=2), en partant de la loi d'index i=0, si l'utilisateur appuie sur la touche "plus" d'après ce qui vient d'être indiqué les moyens 13 vont activer la loi d'index i=1. Dans de tels cas, pour éviter à l'utilisateur d'avoir à appuyer deux ou plusieurs fois pour obtenir une modification du gain, les moyens 13 peuvent sauter à la première loi qui produit une modification du signal CTRL. Dans la situation prise comme exemple, en appuyant une seule fois sur la touche "plus" 17 la loi sélectionnée sera alors non pas la loi d'index i=1 mais la loi d'index i=2 car le signal CTRL sera alors passé de la valeur 4 à la valeur 3.

Le mode de réalisation qui a été décrit jusqu'à maintenant se rapporte à un appareil téléphonique disposant d'un combiné groupant le microphone et l'écouteur. Or il existe des appareil mains libres pour lesquels l'utilisateur ne porte pas l'écouteur près de son oreille. Dans ce cas le haut-parleur 20 diffuse la voix du correspondant qui est alors reprise par le microphone. Cette voix du correspondant est alors considérée par les moyens de traitement comme du bruit ambiant ce qui va à l'inverse du contrôle recherché. Dans cette situation il est donc nécessaire d'éliminer préalablement la voix du correspondant avant d'effectuer le traitement décrit auparavant.

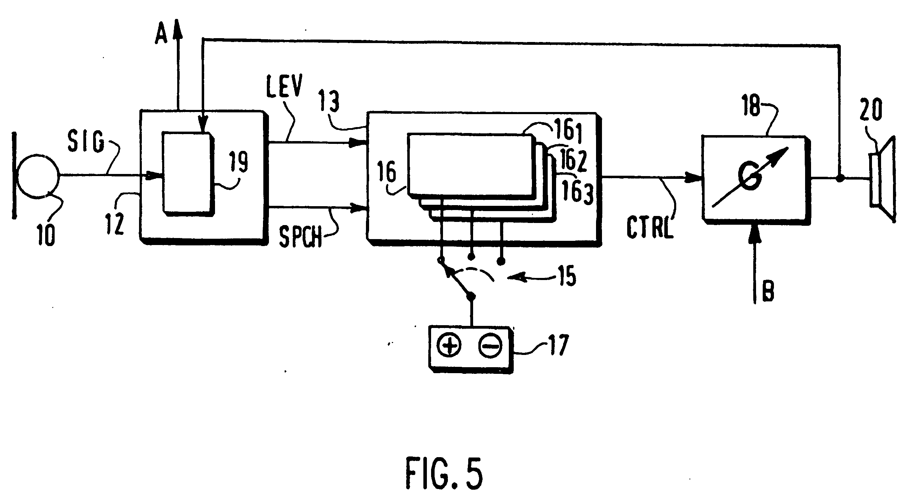

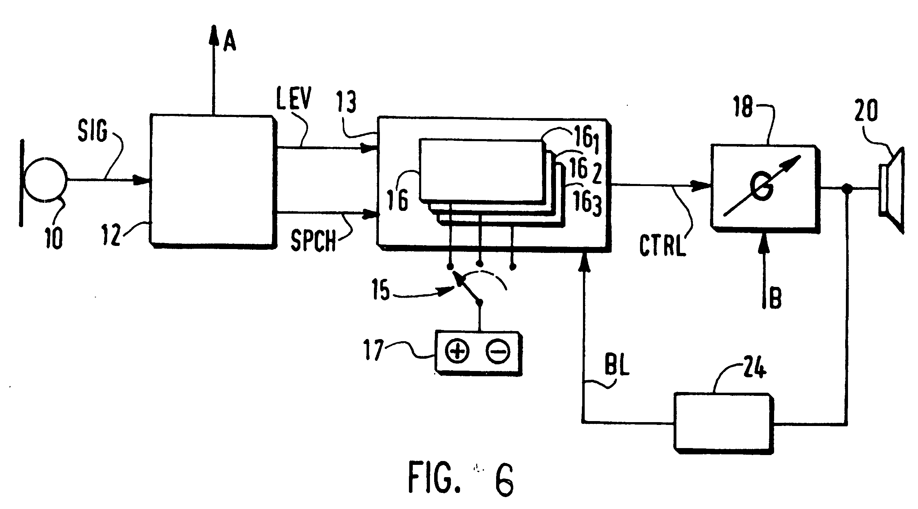

Les figures 5 et 6 se rapportent aux cas d'un sélection des lois de variation dans le cas d'un fonctionnement mains libres. Les mêmes éléments sont indiqués avec les mêmes repères. Cette situation s'avère nécessaire dans le cas où le microphone capte le signal sonore délivré par le haut-parleur, donc la voix du correspondant, de sorte que le signal SIG ne renferme pas uniquement le bruit lorsque le signal SPCH est à zéro. Pour obtenir une mesure du bruit ambiant seul il faut donc éliminer la voix du correspondant.

La figure 5 montre, à titre d'exemple, un schéma d'un premier exemple de réalisation pour une sélection des lois en fonctionnement mains libres. Les moyens de traitement 12 comportent alors des moyens de traitement adaptatif 19. Ceux-ci reçoivent le signal arrivant sur le haut-parleur 20 et le signal SIG délivré par le microphone 10. En appliquant un algorithme connu de filtrage adaptatif, on peut ainsi éliminer l'influence du signal du correspondant figurant dans le signal capté par le microphone et par voie de conséquence obtenir une mesure du seul bruit ambiant lorsque le signal SPCH est inactif. Cet algorithme est par exemple décrit dans le document "Adaptive Noise Cancelling : Principles and Applications" by B.WIDROW and al. Proceedings of the IEEE, vol 63. n°. 12, December 1975, pages 1692- 1716.

La figure 6 montre, à titre d'exemple, un schéma d'un second exemple de réalisation des moyens de sélection des lois de variation en fonctionnement mains libres. Dans ce cas des moyens 24 mesurent l'énergie BL du signal arrivant sur le haut-parleur 20. Le niveau BL du signal arrivant sur le haut-parleur est introduit dans les moyens de contrôle 13. Lorsque le signal SPCH est inactif (pas de voix dans SIG), les moyens de contrôle 13 éliminent le niveau BL du niveau LEV de manière à obtenir une mesure du bruit ambiant.

## Revendications

1. Appareil téléphonique muni de moyens de contrôle automatique de gain (13) pour contrôler, en fonction d'un niveau de bruit ambiant local, un volume sonore restitué à partir d'un signal provenant d'un correspondant,
de moyens (16) pour stocker différentes lois de variation du gain en dépendance avec le niveau de bruit ambiant et ceci pour un même niveau de bruit ambiant exempt du volume sonore restitué,
**caractérisé en ce que** l'appareil comporte des moyens d'entrée (17) pour permettre à un utilisateur de choisir, à partir d'un premier gain une des lois en fonction de son confort d'écoute en tenant compte du fait que la loi détermine un gain différent du premier gain.

2. Appareil selon la revendication 1 **caractérisé en ce que** les lois sont rangées selon un index et **en ce que** par une seule commande de l'utilisateur l'index peut être changé de plusieurs unités jusqu'à correspondre à un deuxième gain différent du premier.

3. Appareil selon la revendication 1 ou 2, **caractérisé en ce que** les lois de variation du gain sont stockées dans des moyens de mémorisation, les moyens d'entrée adressant les moyens de mémorisation pour y sélectionner la loi de variation désirée.

4. Appareil selon la revendication 2 ou 3, **caractérisé en ce que** les lois de variation du gain sont rangées dans un ordre régulier de croissance/décroissance du gain, les moyens d'entrée opérant par incrémentation/décrémentation d'un index d'ordre de sélection.

5. Appareil selon la revendication 4, **caractérisé en ce qu'**une intervention des moyens d'entrée entraîne que la loi de variation sélectionnée est, dans l'ordre de sélection, la première loi qui modifie le gain pour le niveau de bruit ambiant détecté.

## Patentansprüche

1. Telefongerät mit automatischer Verstärkungsregelung (13), um entsprechend einem örtlichen Umgebungsrauschpegel ein Klangvolumen zu regeln, das anhand eines Signals wiederhergestellt wurde, das von einem Gesprächspartner kommt,
Mittel (16) zum Speichern unterschiedlicher Variationsgesetze für die Verstärkung, abhängig vom Umgebungsrauschpegel, und dies für einen selben Umgebungsrauschpegel ohne des wiederhergestellte Klangvolumen,
**dadurch gekennzeichnet, dass** das Gerät Eingangsmittel (17) enthält, um es einem Anwender zu ermöglichen, anhand einer ersten Verstärkung eines der Gesetze entsprechend seinem Hörkomfort zu wählen, unter Berücksichtigung der Tatsache, dass das Gesetz eine zur ersten Verstärkung unterschiedliche Verstärkung festlegt.

2. Gerät nach Anspruch 1, **dadurch gekennzeichnet, dass** die Gesetze nach einem Index sortiert sind, und dadurch, dass der Index mit einer einzigen Bedienung des Anwenders um mehrere Einheiten geändert werden kann, bis er einer zweiten, von der ersten unterschiedlichen Verstärkung entspricht.

3. Gerät nach Anspruch 1 oder 2, **dadurch gekennzeichnet, dass** die Variationsgesetze für die Verstärkung in Speichermitteln gespeichert werden, wobei die Eingangsmittel die Speichermittel adressieren, um dort das gewünschte Variationsgesetz auszuwählen.

4. Gerät nach Anspruch 2 oder 3, **dadurch gekennzeichnet, dass** die Variationsgesetze für die Verstärkung in einer regelmäßig aufsteigenden/absteigenden Verstärkungsreihenfolge sortiert werden, wobei die Eingangsmittel ihre Auswahl per Inkrement/Dekrement eines in der Reihenfolge befindlichen Indexes treffen.

5. Gerät nach Anspruch 4, **dadurch gekennzeichnet, dass** ein Eingriff der Eingangsmittel dazu führt, dass das in der Auswahlreihenfolge ausgewählte Variationsgesetz für den erkannten Umgebungsrauschpegel das erste die Verstärkung ändernde Gesetz ist.

## Claims

1. A telephone set comprising automatic gain control means (13) for controlling a sound volume as a function of a local ambient noise level, which sound volume is restored on the basis of a signal coming from a called party, means (16) for storing various gain variation laws in dependence on the level of the ambient noise and this for the same ambient noise level without the restored sound volume, **characterized in that** the telephone set includes input means (17) for enabling a user to choose, on the basis of a first gain, one of the laws as a function of its listening convenience while reckoning with the fact that the law determines a different gain from the first gain.

2. The telephone as claimed in claim 1, **characterized in that** the laws are arranged according to an index and **in that**, by a single command from the user, the index can be changed from various units until it corresponds to a second gain which is different from the first gain.

3. The telephone as claimed in claim 1 or 2, **characterized in that** the gain variation laws are stored in storage means, the input means addressing the storage means for selecting therefrom the desired variation law.

4. The telephone as claimed in claim 2 or 3, **characterized in that** the gain variation laws are arranged in a regular order of increasing/decreasing gain, the input means operating by incrementation/decrementation of an index of the order of selection.

5. The telephone as claimed in claim 4, **characterized in that** a use of input means implies that the selected variation law is, in the order of selection, the first law to modify the gain for the detected ambient noise level.
